# FASCICULE DE BREVET EUROPEEN

(11) **EP 2 859 320 B1**
(45) Date de publication et mention de la délivrance du brevet: **27.05.2020**
(21) Numéro de dépôt: 13731842.4
(22) Date de dépôt: 11.06.2013
(51) Int. Cl.: G01N 1/22

(54) **PROCEDE DE CONDITIONNEMENT D'UN ECHANTILLON DE MELANGE GAZEUX TRANSITANT DANS UNE CANALISATION ET DISPOSITIF CORRESPONDANT**
VERFAHREN ZUR KONDITIONIERUNG EINER PROBE EINES IN EINER ROHRLEITUNG FLIESSENDEN GASGEMISCHES UND ENTSPRECHENDE VORRICHTUNG
METHOD FOR CONTAINING A SAMPLE OF A GASEOUS MIXTURE FLOWING IN A PIPELINE AND CORRESPONDING DEVICE

(30) Priorité: 11.06.2012 FR 1255426
(43) Date de publication de la demande: 15.04.2015
(73) Titulaire: Ecomesure, 91400 Saclay (FR); VEOLIA PROPRETE, 75008 Paris (FR)
(72) Inventeur: CHAUCHERIE, Xavier, F-78000 Versailles (FR); LEDUR, David, F-92100 Boulogne Billancourt (FR)
(74) Mandataire: Novagraaf Technologies
(86) Numéro de dépôt international: PCT/FR2013/051351
(87) Numéro de publication internationale: WO 2013/186479

(56) Documents cités:
- WO-A1-01/84111
- WO-A1-02/071030
- US-A- 3 938 390
- US-A- 5 297 432
- US-A- 5 596 154
- US-A1- 2004 046 957
- US-A1- 2004 191 130
- US-A1- 2008 148 812
- US-A1- 2010 186 523
- US-A1- 2010 284 006

## Description

La présente invention concerne le domaine des émissions canalisées de mélange gazeux, c'est-à-dire un flux de mélange gazeux dans une canalisation.

Le mélange gazeux peut soit être exempt de particules, soit comprendre des particules, par exemple un aérosol ou des fumées issues d'une combustion. Par concision, en fonction de la gamme de températures utilisées dans le traitement thermique dont sont issues les fumées, on entend par « combustion » une combustion, une pyrolyse ou une gazéification.

Différent types d'industries sont concernées par les émissions canalisées, par exemple la pharmacie, le bâtiment et les travaux publics (cimenteries), le traitement des ordures ménagères, le bois, la sidérurgie, etc. En fonction de la nature du couple combustible/comburant mis en œuvre lors d'une combustion par exemple, la composition chimique et les caractéristiques physico-chimiques (température, humidité, concentration, granulométrie) des fumées peuvent être diverses.

En sortie de combustion, les fumées sont canalisées dans une canalisation, par exemple une cheminée, pour être ensuite typiquement rejetées à l'air libre ou traitées par différents procédés.

Pour optimiser la combustion ou le traitement pré ou post- combustion, ou pour respecter des contraintes règlementaires environnementales, il apparaît utile d'analyser le mélange gazeux.

Il convient donc généralement de prélever un échantillon et d'analyser celui-ci par un analyseur, typiquement un analyseur de gaz ou un analyseur de particules. Toutefois, les conditions opératoires des analyseurs actuels ne sont pas forcément compatibles avec les conditions thermodynamiques du flux ni avec les caractéristiques physico-chimiques du mélange gazeux de certaines émissions canalisées. En particulier, certains analyseurs ne peuvent pas fonctionner aux valeurs de température, hygrométrie, voire de concentration en particules ou en gaz qui règnent dans la canalisation.

Typiquement, à ce jour, deux types de solutions existent : l'une consistant à effectuer manuellement ou automatiquement des mesures in situ dans une canalisation à des températures élevées, ce qui implique d'avoir un analyseur spécifique, complexe et cher, et dont les mesures faites en continu sont intrinsèquement moyennées ; l'autre consistant à effectuer des mesures à température ambiante, manuellement ou automatiquement, avec un analyseur externe à la canalisation sur un échantillon prélevé dans la canalisation. Dans ce dernier cas, la représentativité de l'échantillon n'est pas toujours satisfaisante.

A ce jour, pour être en accord avec les conditions de mesure des analyseurs externes, le plus souvent, il est nécessaire de diluer l'échantillon, typiquement avec de l'air de dilution, pour lui donner ainsi une température ou une hygrométrie compatible avec celles-là. Des exemples de documents de l'état de la technique sont: WO02/071030, US5596154, US5297432, US2010/0284006, US3938390, US2004/0191130, WO01/84111.

En outre, dans le cas des particules, il y a nécessité de chauffer l'air (ou l'azote) de dilution provenant d'une pompe ou d'un compresseur ou d'un injecteur Venturi ou d'un réseau d'air comprimé, à l'extérieur du conduit ou cheminée ce qui rend le dispositif relativement lourd à mettre en œuvre. Aussi, il est nécessaire de mesurer en parallèle la température de la cheminée pour ajuster la température de chauffe de l'air de dilution qui peut être sensiblement différente de la température réelle de l'air de dilution

La présente invention a pour but de remédier à ces inconvénients en proposant une solution permettant d'extraire et de conditionner un échantillon représentatif, de sorte à pouvoir analyser ledit échantillon avec un analyseur externe.

Avec cet objectif en vue, selon un premier de ses objets, l'invention concerne un procédé de conditionnement d'un échantillon de mélange gazeux s'écoulant dans une canalisation tel que defini dans la revendication 1.

On peut prévoir en outre une étape consistant à abaisser la température dudit échantillon prélevé et dilué.

L'étape de dilution est effectuée dans une chambre de dilution localisée dans la canalisation.

De préférence, l'étape de dilution est effectuée avec un gaz de dilution de composition différente de celle dudit échantillon

On peut prévoir en outre une étape de régulation en température de l'échantillon prélevé et dilué.

On peut prévoir en outre une étape de mise en température du gaz de dilution, préalablement à l'étape de dilution, en particulier par transfert thermique entre le mélange gazeux dans ladite canalisation et une canalisation de dilution située au moins partiellement dans ladite canalisation, par laquelle le gaz de dilution est amené pour l'étape de dilution.

On peut prévoir en outre une étape consistant à analyser ledit échantillon par au moins un analyseur, en particulier externe à la canalisation.

De préférence, l'étape de prélèvement est mise en œuvre à iso-cinétisme de la vitesse d'écoulement.

On peut aussi prévoir que le procédé comprend en outre une étape de coupure, en particulier ultérieure à l'étape de prélèvement.

Selon un autre de ses objets, l'invention concerne un dispositif de conditionnement d'un échantillon prélevé dans un mélange gazeux s'écoulant dans une canalisation tel que défini dans la revendication 7.

Le dispositif selon l'invention est susceptible de mettre en œuvre le procédé selon l'invention.

Au sens de la présente invention on entend indistinctement les termes « destiné à » et « configuré pour ».

Le bec de prélèvement permet de prélever directement, c'est à dire sans coupure ni filtrage, un échantillon dudit mélange gazeux à iso-cinétisme de la vitesse d'écoulement, afin de préserver la granulométrie du mélange gazeux. Le bec de prélèvement ne modifie pas l'écoulement, c'est à dire le comportement du mélange gazeux et des particules éventuellement contenues dans celui-ci. L'échantillon prélevé est donc représentatif du mélange gazeux et des particules éventuellement contenues dans celui-ci.

De préférence, la géométrie du tube de prélèvement, de l'ensemble d'au moins un bec de prélèvement et du tube de sortie est configurée pour rendre l'écoulement de l'échantillon prélevé laminaire, et
la géométrie interne de la première chambre de dilution est telle qu'elle permet de créer des turbulences en son sein.

On peut prévoir que la première chambre de dilution possède une géométrie interne ellipsoïdale ou biconique avec deux cônes de révolution montés aux extrémités d'un cylindre et dont les hauteurs sont confondues entre elles.

On peut prévoir une deuxième chambre de dilution, située le long du tube de sortie, ledit tube de sortie constituant l'entrée de prélèvement de ladite deuxième chambre de dilution.

Dans un mode de réalisation, la deuxième chambre de dilution est destinée à être située à l'intérieur de la canalisation. Dans un autre mode de réalisation, la deuxième chambre de dilution est destinée à être à l'extérieur de la canalisation.

On peut prévoir en outre, par exemple à l'extrémité du tube (sur le tube) de sortie, une pièce intermédiaire multibranches connectée au tube de sortie, la pièce intermédiaire comprenant au moins trois branches, une branche principale destinée à être reliée au tube de sortie, et au moins une branche secondaire, destinée à être reliée à au moins un analyseur. De préférence, on prévoit en outre au moins une autre branche secondaire destinée à être reliée à une sortie pour évacuer l'excès de mélange gazeux, par exemple une pompe ou un injecteur Venturi assurant le prélèvement du surplus éventuel de mélange gazeux dilué, en fonction du ratio de dilution prédéterminé par un opérateur.

On peut prévoir en outre une résistance électrique insérée dans une double-enveloppe pour la régulation en température de l'échantillon prélevé et dilué qui transite dans le tube de sortie.

On peut prévoir en outre au moins un analyseur, pour analyser l'échantillon prélevé et dilué acheminé par le tube de sortie.

On peut prévoir que :
- lorsque la température du mélange gazeux s'écoulant dans la canalisation est inférieure à une valeur seuil, par exemple 300°C, ledit analyseur est destiné à être positionné dans la canalisation ou à l'extérieur de celle-ci, et
- lorsque la température du mélange gazeux s'écoulant dans la canalisation est supérieure à la valeur seuil, par exemple 300°C, au moins un analyseur est destiné à être positionné hors de la canalisation.

On peut mettre en sortie une pluralité d'analyseurs ce qui permet d'analyser à la fois les particules et les gaz.

Selon un autre de ses objets, l'invention concerne un système de conditionnement d'un échantillon prélevé dans un mélange gazeux s'écoulant dans une canalisation comprenant
- un dispositif de conditionnement selon l'invention,
- ladite canalisation, et
- une source de gaz de dilution sec, ladite source étant externe à la canalisation.

De préférence, ledit gaz de dilution comprend de l'azote.

De préférence, lorsque le mélange gazeux s'écoulant dans une canalisation comprend des particules, le gaz de dilution est en outre propre.

L'invention est applicable quel que soit le diamètre de particules.

Grâce à l'invention, il est possible d'utiliser des analyseurs fonctionnant à des conditions ambiantes ou des conditions dites « cheminées » (dont la température est inférieure à 300°C), notamment en température et en humidité relative, pour des mélanges gazeux issus d'une canalisation dans laquelle ces conditions de température ou d'humidité relative sont beaucoup plus élevées.

D'autres caractéristiques et avantages de la présente invention sont décrits dans les revendications jointes et apparaîtront plus clairement à la lecture de la description suivante donnée à titre d'exemple illustratif et non limitatif et faite en référence aux figures annexées dans lesquelles :
- la figure 1 illustre un mode de réalisation du dispositif selon l'invention,
- la figure 2 illustre un mode de réalisation du procédé selon l'invention, et
- la figure 3 illustre une coupe longitudinale d'un mode de réalisation d'une pièce intermédiaire multibranche selon l'invention reliée à un tube de sortie.

### Mélange gazeux

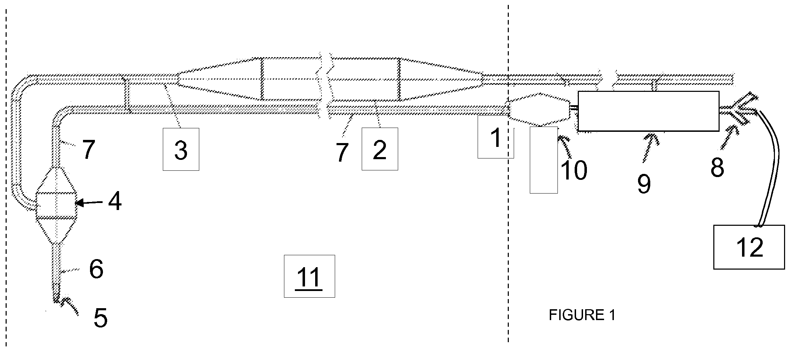

Un mélange gazeux transite à une vitesse d'écoulement dans une canalisation 11, dont les parois sont symbolisées par des pointillés en figure 1. Généralement, le mélange gazeux peut être un gaz pur ou un mélange de gaz. Il peut également comprendre des particules (poussières) dont la concentration et la nature varie en fonction de l'origine dudit mélange, par exemple la combustion ou le procédé dont elles sont issues. En particulier dans le cas des fumées, les particules sont nombreuses et de taille (diamètre équivalent) différente.

On définit par granulométrie la répartition de ces particules selon leur diamètre, que ce soit le diamètre équivalent, géométrique, aérodynamique, optique ou de mobilité électrique.

Par souci de concision on ne décrit ici qu'un mélange gazeux sous forme de fumées industrielles, canalisées dans une canalisation sous forme de cheminée à des températures dites « cheminées », c'est-à-dire à des températures comprises entre 50°C et 300°C.

Toutefois, l'invention n'est pas limitée à ces modes de réalisation. Notamment, elle n'est pas limitée aux fumées issues d'une combustion. Elle peut être mise en œuvre pour des gaz exempts de particules.

Elle peut également être mise en œuvre pour des gammes de températures ambiantes (10°C-40°C), par exemple pour le conditionnement d'un mélange gazeux dans un réseau de ventilation générale. Par exemple le mélange gazeux est un aérosol. Sans particules, le mélange gazeux peut être du type « émission diffuse », chargé en humidité et/ou chaud c'est-à-dire à une température comprise entre 40°C et 70°C.

Elle peut également être mise en œuvre pour des conditions dites « process » c'est-à-dire dont la température est comprise entre 300°C et 1100°C.

### Prélèvement

Une étape consiste à prélever 100 dans la canalisation un échantillon du mélange gazeux en vue de son analyse par un analyseur 12 dont l'une au moins des conditions de fonctionnement parmi un ensemble comprenant la température, l'humidité relative et la concentration en particules n'est pas compatible avec les valeurs correspondantes du mélange gazeux dans la canalisation.

On cherche à ce que l'échantillon prélevé soit aussi représentatif que possible, c'est-à-dire qu'il conserve la granulométrie du mélange gazeux dont il est issu, même si sa concentration en particules peut être inférieure.

Un échantillon prélevé représentatif permet en effet de pouvoir les mesurer en temps réel, voire de mieux connaître et comprendre par exemple les phénomènes à l'origine de la formation des particules. Dans le cas d'une combustion, cela permet donc d'optimiser la combustion en elle-même.

Avantageusement, l'étape de prélèvement 100 préserve la granulométrie du mélange gazeux, c'est-à-dire la granulométrie de la distribution des particules et la proportion de chaque gaz du mélange gazeux.

On appelle « coupure » une étape consistant à séparer les particules selon leur diamètre afin de ne conserver que celles qui ont un diamètre inférieur à une valeur seuil appelée diamètre de coupure, grâce à un dispositif de coupure, qui est différent d'un filtre.

Pour les mélanges gazeux comprenant des particules, on peut mettre en œuvre une étape de coupure. De préférence, l'étape de coupure est mise en œuvre après l'étape de prélèvement 100 et avant l'étape de dilution 110. A cet effet, on prévoit par exemple un cyclone ou un impacteur installé en amont de l'entrée de prélèvement, par exemple sur le tube de prélèvement 6 en aval du bec de prélèvement 5.

Avantageusement, il n'est pas nécessaire de mettre en œuvre l'étape de coupure en amont de l'étape de prélèvement 100, ce qui permet de garantir un prélèvement à iso-cinétisme.

En outre, le prélèvement est avantageusement effectué directement dans la canalisation 11, à iso-cinétisme de la vitesse d'écoulement du mélange gazeux. De ce fait, il est effectué dans les conditions de température de celle-ci, permettant de garantir le prélèvement d'un échantillon représentatif au niveau thermique puisque celui-ci ne subit pas de perturbation thermique à ce stade.

Le prélèvement effectué à iso-cinétisme de la vitesse d'écoulement, en combinaison avec l'absence de coupure permet de conserver la granulométrie, donc de garantir le prélèvement d'un échantillon représentatif sur ce critère.

Pour assurer l'iso-cinétisme du prélèvement, on peut prévoir un bec de prélèvement 5 dont le diamètre est prédéterminé, par exemple par calcul. Le calcul du diamètre dépend notamment des conditions thermo-aérauliques dans la canalisation. Le calcul peut être effectué selon une norme, par exemple la norme NFX-44052 en France. Les becs de prélèvement sont connus et des exemples peuvent être trouvés à l'adresse http://www.hi-q.net/products/stack-fume-hood-sampling/iso-kinetic-gas-sampling-probes/default.html

Le bec de prélèvement est par exemple vissé sur un filetage équipant un tube de prélèvement 6, de préférence droit, monté à même une chambre de dilution, décrite ultérieurement et présentant le même diamètre intérieur d'entrée que celui du tube droit. Préférentiellement, pour des débits d'injection de gaz de dilution inférieur à 50 1/min, le diamètre intérieur de ce tube droit est de 6 mm pour une longueur supérieure à au moins 10 fois le diamètre intérieur de ce tube droit. L'avantage du tube droit 6, dont l'axe d'élongation propre est de préférence confondu avec celui de la chambre de dilution 4 décrite ci-après, et parallèle à la direction du flux gazeux dans la canalisation 11, est de limiter les risques de sédimentation des particules. De préférence, les vitesses d'écoulement sont au moins supérieures à 5 m/s. en particulier, on prévoit des vitesses d'écoulement supérieures à 10 m/s, pour limiter au maximum les dépôts.

Dans un mode de réalisation, on prévoit une pluralité de becs interchangeables, par exemple avec des diamètres compris entre 2 et 12 mm par pas de 1 mm, ce qui permet par exemple de pouvoir changer facilement et rapidement de bec en cas de variation de débit d'écoulement.

### Dilution

On prévoit une étape de dilution 110 de l'échantillon prélevé.

La dilution permet de diminuer, selon un rapport ou facteur de dilution donné, la concentration en particules ou en gaz et/ou l'humidité de l'échantillon prélevé. En outre la dilution à chaud avec un air propre et sec permet de conserver le mélange gazeux et permet, dans la deuxième chambre de dilution 10 décrite ultérieurement, de diminuer la température de l'échantillon dilué sans risque de condensation.

Avantageusement, on prévoit un facteur de dilution compris entre 2 et 200 et plus préférentiellement entre 2 et 100. La valeur du facteur de dilution est le rapport des débits gazeux en entrée de la chambre de dilution (prélèvement iso-cinétique et gaz de dilution) et en sortie de celle-ci.

Le facteur de dilution R est calculé par exemple de la manière suivante R = (D2 +D3)/[(D2+D3)-D1] avec
D1 le débit du gaz de dilution, dans l'entrée de dilution décrite ultérieurement,
D2 le débit de l'excès de mélange gazeux évacué, et
D3 le débit d'aspiration de l'analyseur.

Comme décrit ultérieurement, la chambre de dilution est reliée à un tube de sortie, lui-même relié à une pièce multibranches dont une branche permet d'écouler le mélange gazeux vers au moins un analyseur selon le débit D3 et une autre branche permet d'écouler le débit D2 en excès vers une sortie.

Le volume de la chambre de dilution n'a pas d'influence directe dans le calcul de R mais ce volume est défini a minima pour que l'écoulement soit turbulent en son sein.

L'étape de dilution 110 consiste à diluer l'échantillon prélevé par un gaz de dilution propre et sec. De préférence, le gaz de dilution comprend de l'azote ou est de l'azote. Par exemple le gaz de dilution est de l'air comprimé, qui peut provenir par exemple du réseau d'air comprimé sur le site industriel sur lequel le prélèvement est effectué.

Par « propre », on entend un gaz de dilution dont la concentration en poussières est inférieure à un seuil prédéterminé de celle de l'échantillon. En l'espèce, le seuil est de 1%.

Par « sec », on entend un gaz de dilution dont l'humidité relative (ou le point de rosée à une température déterminée) est inférieure à un seuil prédéterminé de celle de l'échantillon. En l'espèce, le seuil est de 0,5%.

Un tube d'entrée 1, en l'espèce droit, ce qui permet de réduire les pertes de charges et de rendre l'écoulement plus laminaire, est configuré pour amener le gaz de dilution vers la première chambre de dilution 4 décrite ci-après depuis une source externe à la canalisation, par exemple par une pompe, un compresseur, un injecteur Venturi ou un réseau d'air comprimé ou d'azote.

Le débit du gaz de dilution propre et sec est calculé et ajusté au moins en fonction du rapport de dilution désiré.

Avantageusement, l'étape de dilution est effectuée à une température de dilution T_dil égale ou proche de la température T_prel du mélange gazeux dans la canalisation lors de l'étape de prélèvement. Par « proche » on entend une température comprise entre la température du mélange gazeux dans la canalisation lors de l'étape de prélèvement et cette même température moins une valeur prédéterminée, par exemple 5% de cette même température. En l'espèce, on a T_dil compris dans l'ensemble [T_prel ; T_prel-X%(T_prel)] avec par exemple X=5. Une telle température de dilution proche de celle du prélèvement permet d'éviter une éventuelle condensation de l'échantillon, d'assurer que la dilution est réalisée dans les mêmes conditions physico-chimiques régnant dans la canalisation et d'assurer la représentativité de l'échantillon dilué.

L'étape de dilution est effectuée au moins dans une première chambre de dilution 4.

### Chambre de dilution

Avantageusement, la chambre de dilution 4 est localisée dans la canalisation, ce qui permet d'optimiser l'énergie thermique puisque l'énergie thermique de la canalisation permet de mettre à température ladite chambre de dilution 4, il n'est pas nécessaire de chauffer celle-ci par des moyens de chauffe supplémentaires. Cette localisation permet aussi de garantir que la température de dilution soit proche de celle du prélèvement.

Avantageusement, le bec prélèvement 5 et la chambre de dilution 4 sont au plus près l'un de l'autre. Par exemple, un bec de prélèvement est monté sur la chambre de dilution, ce qui permet d'avoir une distance entre le prélèvement et l'intérieur de la chambre de dilution de l'ordre de la longueur du bec, soit de 3 à 10 centimètres. Une telle proximité permet d'éviter toute transformation éventuelle de l'échantillon (au sens physico-chimique) et limite au maximum les risques de dépôts.

La chambre de dilution 4 comprend :
- une entrée de prélèvement pour l'échantillon prélevé,
- une entrée de dilution, distincte de l'entrée de prélèvement, pour le gaz de dilution (préalablement chauffé comme décrit ci-après dans une chambre de chauffe), et
- une sortie, reliée à un tube de sortie comprenant l'échantillon dilué dans un ratio maximal de 1:300.

L'entrée de prélèvement est reliée à un dispositif de prélèvement de l'échantillon.

En particulier dans le cas où le mélange gazeux comprend des particules, le dispositif de prélèvement comprend le bec de prélèvement 5. Le bec de prélèvement 5 peut être monté directement sur l'entrée de prélèvement de la chambre de dilution 4. Il peut aussi être monté sur le tube de prélèvement 6, le tube de prélèvement 6 étant alors monté sur l'entrée de prélèvement de la chambre de dilution 4.

En particulier dans le cas où le mélange gazeux est exempt de particules, le bec de prélèvement 5 n'est pas nécessaire et le dispositif de prélèvement peut ne comprendre que le tube de prélèvement 6 monté sur l'entrée de prélèvement de la chambre de dilution 4.

De préférence, la forme de la chambre de dilution présente un axe d'élongation, en l'espèce parallèle avec l'axe d'élongation de la canalisation. De préférence, l'entrée de prélèvement se situe également le long de cet axe d'élongation, ce qui facilite le prélèvement et permet d'obtenir un échantillon représentatif. En l'espèce, le bec de prélèvement présente un axe d'élongation, confondu avec celui de la chambre de dilution. En l'espèce le bec de prélèvement présente une forme globalement tubulaire. D'autres formes peuvent être mises en œuvre, par exemple suivant la vitesse d'écoulement et le débit de l'analyseur utilisé, le bec peut être conique.

De préférence, pour la chambre de dilution, les différents tubes assurant l'écoulement ou le bec de prélèvement, on limite les coudes ou angles, ce qui permet d'éviter la sédimentation des particules, grâce aussi un écoulement le plus laminaire possible.

La géométrie interne de la chambre de dilution 4 dépend notamment des débits entrants et du débit sortant. Par sa forme et son volume, la géométrie interne est telle qu'elle permet de créer des turbulences ou vortex en son sein. De préférence, on prévoit que la forme interne contient le moins d'angles possibles, voire aucun, ce qui, comme pour le bec de prélèvement, limite le risque de dépôt des particules dans ceux-ci.

Par exemple, on prévoit une géométrie ellipsoïdale ou biconique avec deux cônes de révolution montés aux extrémités d'un cylindre et dont les hauteurs sont confondues entre elles, et en l'espèce confondues également avec l'axe d'élongation de la chambre de dilution. Avantageusement, l'angle intérieur des deux cônes est de 30°, ce qui limite les risques de sédimentation des particules et permet aussi de rendre laminaire le flux en sortie de la chambre.

Préférentiellement, pour des débits d'injection de gaz de dilution inférieurs à 50 1/min, on peut prévoir que :
- le diamètre du cylindre situé entre les deux cônes de la chambre de dilution est au moins supérieur à 7 fois le diamètre de l'entrée de prélèvement,
- le diamètre de sortie de la chambre de dilution (à laquelle est relié un tube de sortie 7 décrit ultérieurement) est égal au diamètre d'entrée de prélèvement, ce qui permet d'obtenir une vitesse d'écoulement en sortie importante, par exemple au moins supérieures à 5 m/s et de préférence supérieure à 10 m/s.

En sortie de la chambre de dilution, la vitesse d'écoulement est déterminée par la forme de la chambre, le diamètre du tube de sortie 7 et les débits entrants (prélèvement et gaz de dilution). On prévoit avantageusement de dimensionner la chambre et le tube de sortie 7 de sorte à obtenir, pour les débits entrants considérés, une vitesse d'écoulement importante, c'est-à-dire supérieure à une valeur seuil, ce qui permet d'entrainer les grosses particules. On prévoit en l'espèce une vitesse d'écoulement en sortie de la chambre de dilution au moins supérieures à 5 m/s et de préférence supérieure ou égale à 10 m/s.

Le tube de sortie 7 permet d'acheminer 130 l'échantillon prélevé et dilué depuis la chambre de dilution 4 vers l'extérieur de la canalisation 11. Il comprend une portion dans la canalisation et une portion externe à la canalisation. Préférentiellement et pour des débits d'injection de gaz de dilution inférieurs à 50 1/min, le diamètre intérieur du tube 7 est de 6 mm.

De préférence, le tube de sortie 7 présente, pour la partie reliée à la chambre de dilution 4, un axe d'élongation parallèle, en l'espèce confondu, avec l'axe d'élongation de la chambre de dilution. Cette configuration permet notamment de limiter les risques de pertes de charges. Pour acheminer l'échantillon prélevé et dilué vers l'extérieur de la canalisation, le tube de sortie 7 présente de préférence peu de coudes, de sorte également à limiter les pertes de charges et les turbulences dues aux coudes, en l'espèce il est en forme de L.

L'autre extrémité du tube 7 est reliée à un ou plusieurs analyseurs 12 de gaz et/ou de particules, manuels ou automatiques, placé(s) à l'extérieur de la canalisation 11.

On peut prévoir sur le tube de sortie 7, en amont de l'analyseur 12, une pièce intermédiaire 8, en l'espèce une pièce multibranches parfois appelée « diviseur de débit », permettant de relier le tube de sortie 7 à une pompe ou un injecteur Venturi assurant le prélèvement du surplus éventuel de mélange gazeux dilué en fonction du ratio de dilution prédéterminé par un opérateur. Elle est placée de préférence également à l'extérieur de la canalisation.

La pièce intermédiaire multibranches 8 comprend au moins deux branches, une branche reliée à au moins un analyseur, et l'autre branche reliée à une sortie pour évacuer l'excès de mélange gazeux.

En l'espèce la pièce multibranches 8 comprend trois branches, l'une principale 81 pour être reliée au tube de sortie 7, et deux branches secondaires 82, 83 dont l'une est reliée à au moins un analyseur 12 (équipé d'une pompe aspirante) et l'autre à une sortie pour évacuer l'excès de mélange gazeux. De préférence, la branche principale 81 présente un axe d'élongation confondu avec celui de tube de sortie 7 sur la partie où la pièce multibranches 8 est montée ; et les branches secondaires forment un angle prédéterminé avec la branche principale, en l'espèce de 30 à 45° chacune de part et d'autre dudit axe d'élongation.

En effet, chaque analyseur possède un débit d'aspiration D3 nominal. Or le débit D7 dans le tube de sortie 7, donc dans la branche principale 81, est égal au débit de dilution plus le débit de prélèvement. Ce débit D7 est classiquement supérieur au débit d'aspiration D3, il faut dans ce cas prévoir d'évacuer le mélange gazeux en excès selon un débit D2 égal à D7 moins D3.

En cas de pluralité d'analyseurs, on peut aussi prévoir une pluralité de branches secondaires, chaque analyseur étant relié individuellement à une branche secondaire respective.

La section du tube de sortie 7 extérieure à la canalisation est avantageusement située à l'air libre, ou dans un environnement externe dont la température est inférieure à celle de l'intérieur de la canalisation. Ainsi, le tube de sortie 7 peut ne pas être particulièrement isolé thermiquement, et grâce aux échanges thermiques entre celui-ci et ledit environnement externe), la température de l'échantillon qui transite dans le tube de sortie 7 est abaissée naturellement. Cette configuration permet de mettre en œuvre très simplement, sans moyen de refroidissement supplémentaire, une étape consistant à abaisser la température 140 dudit échantillon prélevé et dilué.

En fonction notamment du type de matériau utilisé pour le tube de sortie, en l'espèce de l'inox, et/ou de la longueur du tube de sortie 7, la température de l'échantillon peut être abaissée jusqu'à la température de l'environnement externe, c'est-à-dire aux conditions opératoires de la plupart des analyseurs. Différents types de matériau sont utilisables pour le tube de sortie. Par exemple d'autres aciers. On peut aussi utiliser, selon les applications, du titane, du quartz ou de la céramique. Le matériau utilisé ne doit pas réagir chimiquement avec le gaz qui s'écoule en son sein.

Cependant, on peut prévoir une étape de régulation 150 en température (refroidissement ou réchauffement) de l'échantillon prélevé et dilué qui transite dans le tube de sortie 7, par exemple par l'utilisation de moyens de refroidissement (non illustrés), par exemple un fluide tel que de l'eau ou de l'air froid circulant dans une double enveloppe ; ou l'utilisation d'une résistance électrique insérée dans une double-enveloppe 9 ou encore un fluide tel que de l'huile chaude circulant dans une double-enveloppe. Ce qui permet de maintenir la température de l'échantillon prélevé et dilué à une valeur ou dans une gamme de valeurs prédéterminée(s). Cela peut-être utile pour préserver la représentativité de l'échantillon dilué si un analyseur fonctionne dans une gamme de température supérieure à la température ambiante / de l'environnement externe, par exemple pour une gamme de températures de 10°C à 40°C ou à plus haute température, avec des mesures dites de « process » grâce à des analyseurs équipés de cellules de mesures chauffées à 180°C, ce qui évite ainsi la condensation en se maintenant au dessus du point de rosée.

Ici, comme la dilution est mise en œuvre avec un mélange gazeux sec, même si la température de l'échantillon est abaissée après la dilution, les conditions de celui-ci restent toujours au-dessus du point de rosée, ce qui évite la condensation.

### Mise en température préalable

Comme vu précédemment, la dilution 110 est avantageusement effectuée à la température de l'échantillon prélevé. En effet, si la dilution est effectuée à une température supérieure à la température de la canalisation, cela nécessite un apport coûteux d'énergie lorsque cette température est élevée. Et si la température est abaissée avant la dilution, il existe un risque problématique de condensation. En outre, baisser ou augmenter la température peut avoir un effet sur la composition physico-chimique des fumées prélevées, par exemple la volatilisation d'espèces chimiques, ou la conversion gaz-particules.

A cet effet, et en particulier pour des températures de canalisation supérieures à une température ambiante (10°C, 40°C), on peut prévoir une étape 90 de mise en température du gaz de dilution, préalablement à l'étape de dilution, c'est-à-dire avant son introduction dans la première chambre de dilution.

Cette mise en température peut être effectuée directement par le tube d'entrée 1 du gaz de dilution, dont une partie est alors située dans la canalisation, ou indirectement via une chambre de chauffe 2 placée également de préférence dans la canalisation 11.

Ainsi, il n'est pas nécessaire de mettre en œuvre des moyens de chauffe externes supplémentaires, le gaz de dilution est chauffé par l'énergie thermique présente dans la canalisation et sa température est égale ou très proche de la température régnant dans la canalisation, ce qui évite les problèmes de condensation et optimise l'énergie en réduisant la consommation énergétique de l'ensemble.

Cette mise en température préalable à la dilution est ainsi réalisée par un dispositif très simple, léger et facile à mettre en œuvre.

En l'espèce le tube d'entrée 1 est raccordé à une chambre de chauffe 2 à l'intérieur de la canalisation.

Préférentiellement, le diamètre intérieur du tube d'entrée 1 est de 8 mm pour des débits d'injection de gaz de dilution inférieurs à 50 1/min. Aussi, la distance entre l'entrée de l'injection du gaz de dilution et l'entrée de la chambre de chauffe 2 est au moins supérieure à 5 fois le diamètre intérieur du tube d'entrée 1 et donc du diamètre intérieur de l'entrée de la chambre de chauffe 2.

De préférence, on prévoit que la chambre de chauffe 2 permette de mettre le gaz de dilution à la température de l'échantillon, en l'espèce à la température de l'échantillon dans la canalisation.

La chambre de chauffe 2 peut comprendre des chicanes à l'intérieur pour augmenter la surface de contact thermique et assurer la mise en température du gaz de dilution apporté par l'extérieur à la température de la canalisation.

La chambre de chauffe 2 peut être de géométrie biconique. Dans ce cas, l'angle intérieur des deux cônes est de préférence de 10°. Par rapport à l'entrée de la chambre de chauffe, les vitesses d'écoulement sont significativement diminuées pour que le gaz de dilution s'écoule lentement jusqu'à la sortie et soit à la température de la canalisation ou très proche de celle-ci. L'avantage d'avoir ces angles faibles de 10 à 20°(par rapport à l'axe d'élongation de la chambre) est d'avoir une perte de charge la plus petite possible avec une section droite rendant le flux laminaire, pour encore moins de perte de charge.

Préférentiellement et pour des débits d'injection de gaz de dilution extérieur inférieur à 50 1/min, le diamètre intérieur d'entrée de la chambre de chauffe 2 est de 8 mm et le diamètre intérieur de la section droite située entre les deux cônes de la chambre de chauffe 2 est au moins supérieure à 8 fois le diamètre intérieur d'entrée de la chambre de chauffe 2 et pour une longueur au moins supérieure à 80 fois le même diamètre intérieur de l'entrée de la chambre de chauffe 2. Le diamètre de sortie de la chambre de chauffe 2 est aussi de préférence identique au diamètre d'entrée, soit de 8 mm, ce qui limite les pertes de charge, comme vu précédemment.

La sortie de la chambre de chauffe est raccordée à un tube intermédiaire 3, en l'espèce en forme de U, dont l'autre extrémité est reliée à l'entrée de la chambre de dilution 4. Le tube intermédiaire 3 permet de véhiculer le gaz de dilution chaud à l'entrée de la chambre de dilution 4.

Préférentiellement, pour des débits d'injection de gaz de dilution inférieurs à 50 1/min, le diamètre intérieur du tube intermédiaire 3 est de 8 mm avec :
- une section droite de longueur au moins supérieure à 20 fois le diamètre intérieur de ce tube,
- un coude de rayon de courbure égal à 20 mm,
- une section droite de longueur au moins égale à 10 fois le diamètre interne de ce tube, et
- un coude de rayon de courbure égal à 20 mm.

### Analyse distante du prélèvement

On peut prévoir une étape d'analyse 160 physico-chimique de l'échantillon, par au moins un analyseur situé à distance, hors de la canalisation, pour analyser l'échantillon prélevé et dilué acheminé par le tube de sortie 7.

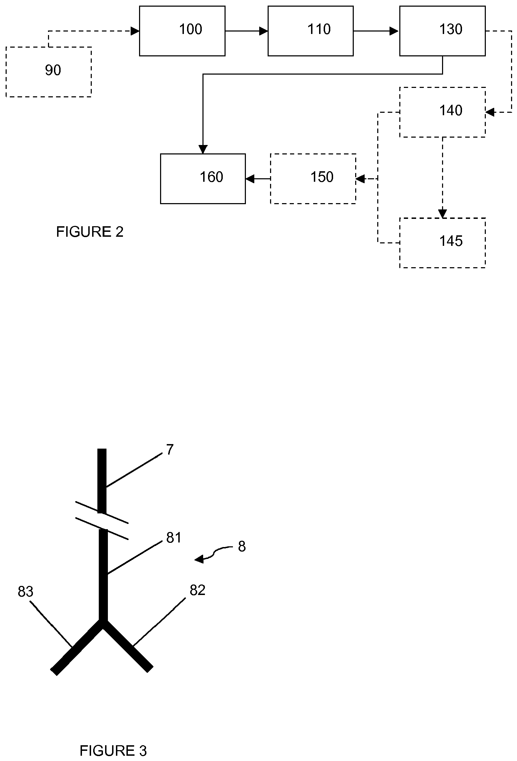

L'invention n'est pas limitée aux modes de réalisation préalablement décrits.
En référence à la figure 2 dans laquelle les pointillés symbolisent le caractère optionnel des étapes, on peut prévoir par exemple une deuxième étape de dilution 145. Elle est de préférence préalable à l'étape 150 de régulation en température de l'échantillon, par une deuxième chambre de dilution 10, située le long du tube de sortie 7, dans sa partie interne ou externe à la canalisation. En l'espèce, la deuxième chambre de dilution 10 est biconique et de mêmes dimensions que la première chambre de dilution 4. De préférence, la première chambre de dilution 4 et la seconde chambre de dilution 10 sont alimentées par le même gaz de dilution.

## Revendications

1. Procédé de conditionnement d'un échantillon de mélange gazeux s'écoulant dans une canalisation (11) à une vitesse d'écoulement, en vue de son analyse par au moins un analyseur (12) dont les conditions de fonctionnement ne sont pas compatibles avec les conditions physico-chimiques du mélange gazeux dans la canalisation,
le procédé comprenant des étapes consistant à:
- prélever (100) un échantillon représentatif du mélange gazeux et des particules éventuellement contenues dans celui-ci dans la canalisation, sans coupure ni filtrage,
- diluer (110) l'échantillon prélevé par un gaz de dilution sec, dans une première chambre de dilution (4) située dans la canalisation (11), à une température de dilution (T_dil) égale ou proche de la température (T_prel) du mélange gazeux dans la canalisation lors de l'étape de prélèvement,
- mettre en température (90) le gaz de dilution via une chambre de chauffe (2) placée dans la canalisation, et
- acheminer (130) l'échantillon prélevé et dilué vers l'extérieur de la canalisation par un tube de sortie (7) en vue de son analyse par ledit analyseur (12).

2. Procédé selon la revendication 1, comprenant en outre une étape (140) consistant à abaisser la température dudit échantillon prélevé et dilué.

3. Procédé selon l'une quelconque des revendications précédentes, comprenant en outre une étape (150) de régulation de la température de l'échantillon prélevé et dilué.

4. Procédé selon l'une quelconque des revendications précédentes, comprenant en outre une étape (90) de mise en température du gaz de dilution, préalablement à l'étape de dilution, par transfert thermique entre le mélange gazeux dans ladite canalisation (11) et une canalisation de dilution située au moins partiellement dans ladite canalisation (11), par laquelle le gaz de dilution est amené pour l'étape de dilution (110).

5. Procédé selon l'une quelconque des revendications précédentes, comprenant en outre une étape (160) consistant à analyser ledit échantillon par au moins un analyseur (12) .

6. Procédé selon l'une quelconque des revendications précédentes, dans lequel l'étape de prélèvement (100) est mise en œuvre à iso-cinétisme de la vitesse d'écoulement, le procédé comprenant optionnellement en outre une étape de coupure ultérieure à l'étape de prélèvement (100).

7. Dispositif de conditionnement d'un échantillon prélevé dans un mélange gazeux s'écoulant dans une canalisation (11) à une vitesse d'écoulement, en vue de son analyse par au moins un analyseur (12) dont les conditions de fonctionnement ne sont pas compatibles avec les conditions physico-chimiques du mélange gazeux dans la canalisation (11),
le dispositif comprenant :
- une première chambre de dilution (4) destinée à être située dans la canalisation (11), pour diluer l'échantillon par un gaz de dilution, à une température de dilution (T_dil) égale ou proche de la température (T_prel) du mélange gazeux dans la canalisation,
la chambre de dilution (4) comprenant
∘ une entrée de prélèvement par laquelle l'échantillon prélevé est amené dans la première chambre de dilution (4),
∘ une entrée de dilution, distincte de l'entrée de prélèvement, pour amener un gaz de dilution, et
∘ un tube de sortie (7) pour acheminer l'échantillon prélevé et dilué depuis la première chambre de dilution (4) vers l'extérieur de ladite chambre (4) en vue de son analyse par ledit analyseur (12),
le dispositif comprenant en outre :
- un tube de prélèvement (6) monté sur l'entrée de prélèvement, ou
- un ensemble d'au moins un bec de prélèvement (5) dans lequel chaque bec (5) peut être monté sur l'entrée de prélèvement,
dans lequel le tube de prélèvement (6) est droit dont l'axe d'élongation propre est confondu avec celui de la chambre de dilution (4), et parallèle à la direction du flux gazeux dans la canalisation (11), et
en ce qu'il comprend en outre une chambre de chauffe (2), destinée à être située dans la canalisation (11), pour mettre en température le gaz de dilution avant son introduction dans la première chambre de dilution (4).

8. Dispositif selon la revendication 7, dans lequel la géométrie du tube de prélèvement (6), de l'ensemble d'au moins un bec de prélèvement (5) et du tube de sortie (7) est configurée pour rendre l'écoulement de l'échantillon prélevé laminaire, et
la géométrie interne de la première chambre de dilution (4) est telle qu'elle permet de créer des turbulences en son sein.

9. Dispositif selon la revendication 8, dans lequel la première chambre de dilution (4) possède une géométrie interne ellipsoïdale ou biconique avec deux cônes de révolution montés aux extrémités d'un cylindre et dont les hauteurs sont confondues entre elles.

10. Dispositif selon l'une quelconque des revendications 7 à 9, comprenant en outre une deuxième chambre de dilution (10), située le long du tube de sortie (7), ledit tube de sortie (7) constituant l'entrée de prélèvement de ladite deuxième chambre de dilution (10).

11. Dispositif selon l'une quelconque des revendications 7 à 10, comprenant en outre une pièce intermédiaire (8) multibranches connectée au tube de sortie (7), la pièce intermédiaire (8) comprenant au moins trois branches, une branche principale (81) destinée à être reliée au tube de sortie (7), et au moins deux branches secondaires (82, 83) dont l'une est destinée à être reliée à au moins un analyseur (12), et l'autre est destinée à être reliée à une sortie pour évacuer l'excès de mélange gazeux.

12. Dispositif selon l'une quelconque des revendications 7 à 11, comprenant en outre une résistance électrique insérée dans une double-enveloppe (9) pour la régulation en température de l'échantillon prélevé et dilué qui transite dans le tube de sortie (7).

13. Dispositif selon l'une quelconque des revendications 7 à 12, comprenant en outre au moins un analyseur (12) pour analyser l'échantillon prélevé et dilué acheminé par le tube de sortie (7) et dans lequel,
lorsque la température du mélange gazeux s'écoulant dans la canalisation (11) est inférieure à 300°C, ledit analyseur (12) est destiné à être positionné dans la canalisation (11) ou à l'extérieur de celle-ci, et
lorsque la température du mélange gazeux s'écoulant dans la canalisation (11) est supérieure à 300°C, au moins un analyseur (12) est destiné à être positionné hors de la canalisation (11).

14. Système de conditionnement d'un échantillon prélevé dans un mélange gazeux s'écoulant dans une canalisation (11) comprenant
- un dispositif de conditionnement selon l'une quelconque des revendications 7 à 13,
- ladite canalisation (11), et
- une source de gaz de dilution sec, ladite source étant externe à la canalisation, et ledit gaz de dilution comprenant de l'azote.

15. Système selon la revendication 14, dans lequel lorsque le mélange gazeux s'écoulant dans une canalisation (11) comprend des particules, le gaz de dilution est en outre propre.

## Patentansprüche

1. Verfahren zur Konditionierung einer Probe eines in einer Rohrleitung (11) mit einer Strömungsgeschwindigkeit strömenden Gasgemisches, dessen Betriebsbedingungen nicht mit den physikochemischen Bedingungen des Gasgemisches in der Rohrleitung nicht kompatibel sind, in Hinblick auf deren Analyse durch mindestens einen Analysator (12),
wobei das Verfahren die Schritte umfasst, die aus Folgendem bestehen:
- Entnehmen (100) einer repräsentativen Probe des Gasgemisches und der eventuell in demselben enthalten Partikel aus der Rohrleitung, ohne Unterbrechung oder Filterung,
- Verdünnen (110) der entnommenen Probe mit einem trockenen Verdünnungsgas in einer ersten Verdünnungskammer (4), die sich in der Rohrleitung (11) befindet, bei einer Verdünnungstemperatur (T_dil) gleich oder nahe der Temperatur (T_prel) des Gasgemisches in der Rohrleitung beim Schritt des Entnehmens,
- auf Temperatur Bringen (90) des Verdünnungsgases über eine Heizkammer (2), die in der Rohrleitung platziert ist, und
- Befördern (130) der entnommenen und verdünnten Probe nach außerhalb der Rohrleitung durch ein Ausgangsrohr (7) in Hinblick auf deren Analyse durch den Analysator (12).

2. Verfahren nach Anspruch 1, weiter einen Schritt (140) umfassend, der darin besteht, die Temperatur der entnommenen und verdünnten Probe zu senken.

3. Verfahren nach einem der vorstehenden Ansprüche, weiter einen Schritt (150) des Regelns der Temperatur der entnommenen und verdünnten Probe umfassend.

4. Verfahren nach einem der vorstehenden Ansprüche, weiter einen Schritt (90) des auf Temperatur bringens des Verdünnungsgases vor dem Schritt des Verdünnens durch Wärmeübertragung zwischen dem Gasgemisch in der Rohrleitung (11) und einer Verdünungsrohrleitung umfassend, die sich mindestens teilweise in der Rohrleitung (11) befindet, durch die das Verdünnungsgas für den Schritt des Verdünnens (110) zugeführt wird.

5. Verfahren nach einem der vorstehenden Ansprüche, weiter einen Schritt (160) umfassend, der darin besteht, die Probe durch mindestens einen Analysator (12) zu analysieren.

6. Verfahren nach einem der vorstehenden Ansprüche, wobei der Schritt des Entnehmens (100) isokinetisch mit der Strömungsgeschwindigkeit ausgeführt wird, wobei das Verfahren weiter optional einen Schritt des Unterbrechens nach dem Schritt des Entnehmens (100) umfasst.

7. Vorrichtung zur Konditionierung einer entnommenen Probe eines in einer Rohrleitung (11) mit einer Strömungsgeschwindigkeit strömenden Gasgemisches, dessen Betriebsbedingungen nicht mit den physikochemischen Bedingungen des Gasgemisches in der Rohrleitung (11) nicht kompatibel sind, in Hinblick auf deren Analyse durch mindestens einen Analysator (12),
wobei die Vorrichtung umfasst:
- eine erste Verdünnungskammer (4), die dazu bestimmt ist, sich in der Rohrleitung (11) zu befinden, um die Probe durch ein Verdünnungsgas bei einer Verdünnungstemperatur (T_dil) gleich oder nahe der Temperatur (T_prel) des Gasgemisches in der Rohrleitung zu verdünnen,
wobei die Verdünnungskammer (4) umfasst
∘ einen Entnahmeeingang, durch den die entnommene Probe zur ersten Verdünnungskammer (4) zugeführt wird,
∘ einen Verdünnungseingang, der sich vom Entnahmeeingang unterscheidet, um ein Verdünnungsgas zuzuführen, und
∘ ein Ausgangsrohr (7) zum Befördern der entnommenen und verdünnten Probe aus der ersten Verdünnungskammer (4) nach außerhalb der Kammer (4) in Hinblick auf deren Analyse durch den Analysator (12),
wobei die Vorrichtung weiter umfasst:
- ein Entnahmerohr (6), das am Entnahmeeingang montiert ist, oder
- eine Einheit aus mindestens einer Entnahmetülle (5), in der jede Tülle (5) am Entnahmeeingang montiert werden kann,
wobei das Entnahmerohr (6) gerade ist, dessen eigene Ausdehnungsachse mit jener der Verdünnungskammer (4) zusammenfällt, und parallel zum Gasstrom in der Rohrleitung (11), und
dadurch, dass sie weiter eine Heizkammer (2) umfasst, die dazu bestimmt ist, sich in der Rohrleitung (11) zu befinden, um das Verdünnungsgas vor dessen Einführung in die erste Verdünnungskammer (4) auf Temperatur zu bringen.

8. Vorrichtung nach Anspruch 7, wobei die Geometrie des Entnahmerohres (6) der Einheit aus mindestens einer Entnahmetülle (5) und des Ausgangsrohres (7) konfiguriert ist, um die Strömung der entnommenen Probe laminar zu gestalten, und
die innere Geometrie der ersten Verdünnungskammer (4) dergestalt ist, dass sie es ermöglicht in ihrem Inneren Turbulenzen zu kreieren.

9. Vorrichtung nach Anspruch 8, wobei die erste Verdünnungskammer (4) eine elliptische oder bikonische innere Geometrie mit zwei Drehkonen besitzt, die an den Enden eines Zylinders montiert sind, und deren Höhen untereinander zusammenfallen.

10. Vorrichtung nach einem der Ansprüche 7 bis 9, weiter eine zweite Verdünnungskammer (10) umfassend, die sich entlang des Ausgangsrohres (7) befindet, wobei das Ausgangsrohr (7) den Entnahmeeingang der zweiten Verdünnungskammer (10) bildet.

11. Vorrichtung nach einem der Ansprüche 7 bis 10, weiter ein Zwischenstück (8) mit mehreren Ästen umfassend, das mit dem Ausgangsrohr (7) verbunden ist, wobei das Zwischenstück (8) mindestens drei Äste umfasst, einen Hauptast (81), der dazu bestimmt ist, an das Ausgangsrohr (7) angeschlossen zu werden, und mindestens zwei Sekundäräste (82, 83), von denen einer dazu bestimmt ist, an mindestens einen Analysator (12) angeschlossen zu werden, und der andere dazu bestimmt ist, an einen Ausgang angeschlossen zu werden, um den Gasgemischüberschuss zu evakuieren.

12. Vorrichtung nach einem der Ansprüche 7 bis 11, weiter einen elektrischen Widerstand umfassend, der zur Temperaturregelung der entnommenen und verdünnten Probe, die durch das Ausgangsrohr (7) durchführt, in eine Doppelhülle (9) eingeführt wird.

13. Vorrichtung nach einem der Ansprüche 7 bis 12, weiter mindestens einen Analysator (12) zum Analysieren der entnommenen und verdünnten Probe umfassend, die durch das Ausgangsrohr (7) zugeführt wird, und wobei
wenn die Temperatur des Gasgemisches, das durch die Rohrleitung (11) strömt, niedriger als 300 °C ist, der Analysator (12) dazu bestimmt ist, in der Rohrleitung (11) oder außerhalb derselben positioniert zu werden, und
wenn die Temperatur des Gasgemisches, das durch die Rohrleitung (11) strömt, höher als 300 °C ist, mindestens ein Analysator (12) dazu bestimmt ist, außerhalb der Rohrleitung (11) positioniert zu werden.

14. System zur Konditionierung einer Probe eines in einer Rohrleitung (11) strömenden Gasgemisches, umfassend
- eine Vorrichtung zur Konditionierung nach einem der Ansprüche 7 bis 13,
- die Rohrleitung (11), und
- eine Quelle für ein trockenes Verdünnungsgas, wobei die Quelle außerhalb der Rohrleitung ist und das Verdünnungsgas Stickstoff umfasst.

15. System nach Anspruch 14, wobei, wenn das Gasgemisch, das in einer Rohrleitung (11) strömt, Partikel umfasst, das Verdünnungsgas weiter sauber ist.

## Claims

1. Method for containing a sample of a gaseous mixture flowing in a pipeline (11) at a flow rate, for analysis of same by at least one analyser (12) of which the operating conditions are not compatible with the physicochemical conditions of the gaseous mixture in the pipeline,
the method comprising steps of:
- collecting (100) a representative sample of the gaseous mixture and particles contained therein in the pipeline, without cut-off or filtering,
- diluting (110) the collected sample with a dry dilution gas, in a first dilution chamber (4) located in the pipeline (11), at a dilution temperature (T_dil) equal to or close to the temperature (T_prel) of the gaseous mixture in the pipeline during the collection step,
- warming up (90) the dilution gas via a heating chamber (2) placed in the pipeline, and
- conveying (130) the collected and diluted sample out of the pipeline via an outlet pipe (7) for analysis of same by said analyser (12).

2. Method according to claim 1, further comprising a step (140) of lowering the temperature of said collected and diluted sample.

3. Method according to any one of the preceding claims, further comprising a step (150) of regulating the temperature of the collected and diluted sample.

4. Method according to any one of the preceding claims, further comprising a step (90) of warming up the dilution gas, prior to the dilution step, by heat transfer between the gaseous mixture in said pipeline (11) and a dilution pipeline located at least partially in said pipeline (11), whereby the dilution gas is supplied for the dilution step (110).

5. Method according to any one of the preceding claims, further comprising a step (160) of analysing said sample by at least one analyser (12).

6. Method according to any one of the preceding claims, wherein the collection step (100) is carried out isokinetically with the flow rate, the method optionally further comprising a cut-off step subsequent to the collection step (100).

7. Device for containing a sample collected in a gaseous mixture flowing in a pipeline (11) at a flow rate, for analysis of same by at least one analyser (12) of which the operating conditions are not compatible with the physicochemical conditions of the gaseous mixture in the pipeline (11),
the device comprising:
- a first dilution chamber (4) intended to be located in the pipeline (11), for diluting the sample with a dilution gas, at a dilution temperature (T_dil) equal to or close to the temperature (T_prel) of the gaseous mixture in the pipeline,
the dilution chamber (4) comprising
∘ a collection inlet whereby the collected sample is supplied into the first dilution chamber (4),
∘ a dilution inlet, separate from the collection inlet, for supplying a dilution gas, and
∘ an outlet pipe (7) for conveying the collected and diluted sample from the first dilution chamber (4) out of said chamber (4) for analysis of same by said analyser (12),
the device further comprising:
- a collection pipe (6) mounted on the collection inlet, or
- an assembly of at least one collection spout (5) wherein each spout (5) may be mounted on the collection inlet,
wherein the collection pipe (6) is straight of which the axis of elongation thereof is merged with that of the dilution chamber (4), and parallel to the direction of the gaseous stream in the pipeline (11), and
in that it further comprises a heating chamber (2), intended to be located in the pipeline (11), for warming up the dilution gas prior to the introduction thereof into the first dilution chamber (4).

8. Device according to claim 7, wherein the geometry of the collection pipe (6), of the assembly of at least one collection spout (5) and of the outlet pipe (7) is configured to render the flow of the collected sample laminar, and
the internal geometry of the first dilution chamber (4) is such that it makes it possible to create turbulence therein.

9. Device according to claim 8, wherein the first dilution chamber (4) has an ellipsoidal or biconical internal geometry with two cones of revolution mounted at the ends of a cylinder and of which the heights are merged with one another.

10. Device according to any one of claims 7 to 9, further comprising a second dilution chamber (10), located along the outlet pipe (7), said outlet pipe (7) forming the collection inlet of said second dilution chamber (10).

11. Device according to any one of claims 7 to 10, further comprising a multibranch intermediate part (8) connected to the outlet pipe (7), the intermediate part (8) comprising at least three branches, a main branch (81) intended to be connected to the outlet pipe (7), and at least two secondary branches (82, 83) of which one is intended to be connected to at least one analyser (12), and the other is intended to be connected to an outlet to discharge the excess gaseous mixture.

12. Device according to any one of claims 7 to 11, further comprising an electric resistor inserted into a double jacket (9) for regulating the temperature of the collected and diluted sample transiting in the outlet pipe (7).

13. Device according to any one of claims 7 to 12, further comprising at least one analyser (12) for analysing the collected and diluted sample conveyed by the outlet pipe (7) and wherein,
when the temperature of the gaseous mixture flowing in the pipeline (11) is less than 300°C, said analyser (12) is intended to be positioned in the pipeline (11) or at the exterior thereof, and
when the temperature of the gaseous mixture flowing in the pipeline (11) is greater than 300°C, at least one analyser (12) is intended to be positioned out of the pipeline (11).

14. System for containing a sample collected in a gaseous mixture flowing in a pipeline (11) comprising
- a containment device according to any one of claims 7 to 13,
- said pipeline (11), and
- a dry dilution gas source, said source being external to the pipeline, and said dilution gas comprising nitrogen.

15. System according to claim 14, wherein when the gaseous mixture flowing in a pipeline (11) comprises particles, the dilution gas is furthermore clean.
